# EUROPEAN PATENT SPECIFICATION

(11) **EP 3 367 489 B1**
(45) Date of publication and mention of the grant of the patent: **27.05.2020**
(21) Application number: 18157740.4
(22) Date of filing: 20.02.2018
(51) Int. Cl.: H01M 8/2465, H01R 13/514, H01R 13/627, H01R 13/631

(54) **CONNECTOR UNIT**
VERBINDEREINHEIT
UNITÉ DE CONNECTEUR

(30) Priority: 22.02.2017 JP 2017030554
(43) Date of publication of application: 29.08.2018
(73) Proprietor: Tyco Electronics Japan G.K., Takatsu-ku Kawasaki Kanagawa 213-8535 (JP); TOYOTA JIDOSHA KABUSHIKI KAISHA, Toyota-shi, Aichi, 471-8571 (JP)
(72) Inventor: Hotta, Daiji, Kawasaki-shi, Kanagawa 213-8535 (JP); Komatsu, Seiji, Kawasaki-shi, Kanagawa 213-8535 (JP); Imanishi, Masahiro, Toyota-shi, Aichi 471-8571 (JP)
(74) Representative: Johnstone, Douglas Ian

(56) References cited:
- EP-A1- 3 104 467
- US-A- 3 848 951
- US-A- 5 122 077
- US-A1- 2006 084 295
- US-A1- 2008 003 482

## Description

### BACKGROUND OF THE INVENTION

The present invention relates to an electrical connector suitable for mating with a cell stack of a fuel cell.

A multi-position connector that is mated with a cell stack provided in a fuel cell is well known (JP 2013-187050 A and JP 2014-154245 A) . The cell stack includes a plurality of cells. The connector includes a plurality of contacts and a housing that includes cavities respectively housing the contacts, and the plurality of contacts are respectively connected to electrodes of the cells of the fuel cell.

Each of the contacts included in the connector disclosed in JP 2014-154245 A includes a first elastic connection portion, a second elastic connection portion, and a connection base portion. The first elastic connection portion sandwiches a plate-like first terminal part, the second elastic portion sandwiches a plate-like second terminal part, and the connection base portion couples these elastic connection portions to each other. JP 2014-154245 A discloses an example in which positive electrodes or negative electrodes of the adjacent cells are connected by the connector.

Positions of the respective cells in the cell stack are mutually deviated within a tolerance range due to dimensional error of a thickness and an outer shape of each of the cells of the fuel cell, assembling error of the stacked cells, etc. Further, in particular, in the on-vehicle fuel cell, each of the cells is deflected by vibration, which causes relative displacement of the cells. Even when the positions of the respective cells on right and left ends of the cell stack are fixed, the cells disposed between the cells on the both ends may be excessively displaced due to vibration or the like in the vertical, lateral, and front-rear directions.

To absorb such positional deviations of the cells by the connector, it is considered to maitain wide clearances in the respective cavities of the housing that house the contacts or to allow the electrodes of the cells to be respectively inserted into innermost parts more than necessary with respect to the contact points of the contacts.

When the clearances in the respective cavities are increased depending on the elastic deformation amounts of the contacts, the displacement of the cells can be absorbed by the elastic deformation of the contacts to some extent. This is similarly applied to the connector disclosed in JP 2014-154245 A including the elastic connection portion.

The displacement, however, is accumulated in the cell thickness direction by the number of the cells relatively displaced. Therefore, absorption of the relative displacement of the cells by the elastic deformation of the contacts in the cavity is limited under restriction in size of the connector, and the connector cannot be much downsized.

In addition, accumulation of the thickness tolerances of the plurality of cells may cause an excess load applied to the contacts and the cell electrodes, which may deteriorate connection reliability.

Furthermore, when the cell electrodes are respectively insertable into the innermost parts more than necessary with respect to the contact points of the contacts as described above, the contact points respectively slide on the cell electrodes at the time of insertion or pulling-out and are likely to be worn out, which may deteriorate connection reliability and inhibit downsizing of the connector. The contact points may be worn similarly in a case where distortion of the cell stack or deflection of the cells occurs during vibration and the contact points respectively slide on the cell electrodes in an in-plane direction of the cells. To eliminate influence on accuracy of measurement based on signals detected through the contacts, it is desirable to prevent the contact points from sliding and from being deviated from the prescribed positions of the cell electrodes. A way of securing the connection reliability includes suppression of positional deviation of the contact points.

A prior art connector (on which the preamble of claim 1 is based) is disclosed in patent US 3848951. The connector is made up from stacked like housing modules each containing three through apertures each of which accommodates a terminal. At each end of one side of each housing module a projecting rib is provided. At each end of an opposite side of each housing module a channel containing a slot is provided. Adjacent housing modules are engaged with each other by sliding the projecting ribs of one housing module into the slots of the adjacent housing module. Limited movement of the housing modules relative to each other in a mating direction is possible by movement of the ribs in the channels. Lateral movement of the housing modules relative to each other is prevented by tabs on each housing module which engage corresponding slots in an adjacent housing module.

A further prior art connector is disclosed in patent US 5122077 which includes plural stacked housing parts which slidingly engage each other and an n-shaped clip which engages opposite sides of the housing parts to restrain movement of the housing parts relative to each other. A further prior art connector is disclosed in patent EP 3104467 A1 which includes stacked housing parts which can move relative to each other to a limited extent in a stacking direction but are restrained against lateral movement relative to each other by ribs on each housing part which engage complementary slots in an adjacent housing part. Further prior art connectors are disclosed in patents US 2006/0084295 A1 and US 2008/0003482 A1 each of which comprises a plurality of stacked housing parts, each of which accommodates plural terminals in through passages therein.

Accordingly, the present invention relates to the connector mated with the components of the stack, and an object of the present invention is to achieve connection reliability of the contacts and the stack components and to promote downsizing of the connector even when the components of the stack are relatively displaced.

### SUMMARY OF THE INVENTION

A connector unit according to the present invention includes a plurality of connector modules that are stacked in a first direction and each include a contact.

In the present invention, a direction that is orthogonal to the first direction and in which the connector modules are mated with respective mating objects is a second direction, and a direction that is orthogonal to both of the first direction and the second direction is a third direction.

Each of the connector modules according to the present invention includes a holding portion and a coupling portion. The holding portion holds the contact, and the coupling portion is positioned on one end side or on each of both end sides relative to the holding portion in the third direction and is coupled to the connector module adjacent in the first direction.

The coupling portion includes a protrusion, a concave part, and a separation inhibiting part. The protrusion protrudes toward one end side in the first direction, the concave part receives the protrusion of the connector module adjacent on the other end side in the first direction, and the separation inhibiting part inhibits separation of the protrusion from the concave part.

Further, the plurality of connector modules coupled by the coupling portions are individually displaceable in any or all of the first direction, the second direction, and the third direction.

In the connector unit according to the present invention, the concave part preferably extends along the second direction, and each of the connector modules is preferably displaceable, with respect to the connector modules adjacent in the first direction, within a movable range that is provided, in the second direction, to the protrusion inserted into the concave part.

In the connector unit according to the present invention, the concave part preferably opens on a rear end side in the second direction, and each of the connector modules is preferably assembled to the connector modules adjacent in the first direction by inserting the protrusion into the concave part from an insertion port and sliding the protrusion along the second direction. The insertion port is positioned on the rear end side of the concave part.

In the connector unit according to the present invention, the protrusion preferably includes a penetration part and the separation inhibiting part. The penetration part penetrates through an opening of the concave part along the first direction and is provided with a movable range in the third direction with respect to the concave part. The separation inhibiting part is housed inside the concave part.

The above-described protrusion is preferably made up of the penetration part and the separation inhibiting part to have a substantially L-shaped cross-section.

In the connector unit according to the present invention, the holding portion is preferably positioned at a center of each of the connector modules in the third direction, and each of the connector modules preferably includes the coupling portion on each of both end sides relative to the holding portion in the third direction.

In the connector unit according to the present invention, each of the connector modules includes two side walls that face in opposite directions in the first direction, the protrusion protrudes from one of the two side walls, and a section in which the contact is positioned and a section in which the separation inhibiting part is positioned are provided between the two side walls.

In a case where the connector unit according to the present invention is disposed adjacent to another connector unit in the first direction, one of the connector modules that faces the other connector unit preferably includes no protrusion, and the other connector modules each preferably include the protrusion.

In the connector unit according to the present invention, the mating objects are preferably cells forming a cell stack of a fuel cell.

According to the connector unit of the present invention, the plurality of coupled connector modules are relatively displaceable individually in the plurality of directions even when the components of the stack as the mating object are relatively displaced. This makes it possible to achieve connection reliability of the contacts and the components of the stack, and to achieve downsizing of the connector.

### BRIEF DESCRIPTION OF THE DRAWINGS

FIG. 1 is a perspective view illustrating a connector unit according to an embodiment of the present invention that is mated with a cell stack of a fuel cell;
FIG. 2 is a perspective view illustrating the connector unit according to the embodiment of the present invention;
FIG. 3 is a diagram illustrating the connector unit viewed from an arrow III direction of FIG. 2;
FIG. 4 is a perspective view illustrating a single connector module viewed from an arrow IV direction of FIG. 3;
FIG. 5 is a diagram illustrating the connector unit viewed from an arrow V direction of FIG. 3;
FIG. 6 is a perspective view illustrating a contact that is held by the connector module illustrated in FIG. 4; and
FIG. 7 is a diagram illustrating a voltage detection electrode of a cell to which the contact illustrated in FIG. 6 is connected.

### DETAILED DESCRIPTION OF THE PREFERRED EMBODIMENT

An embodiment of the present invention is described below with reference to accompanying drawings.

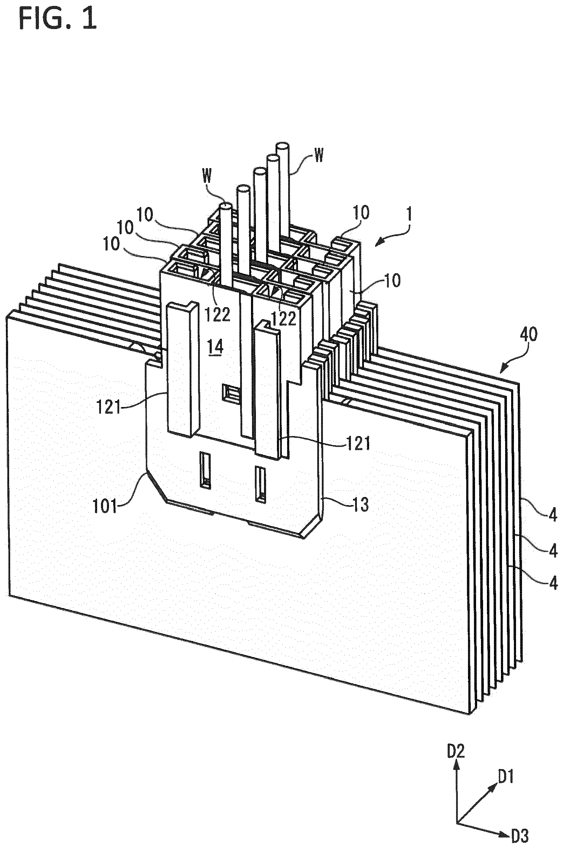

A connector unit 1 illustrated in FIG. 1 is mated with a plurality of cells 4 that configure a cell stack 40 of a fuel cell to be mounted for example on a vehicle.

The cell stack 40 is a stack that includes a large number of flat plate-like cells 4 connected in series to one another, and unillustrated separators.

FIG. 1 illustrates only some of the large number of cells 4. The connector unit 1 is mated with the plurality of cells 4 illustrated in FIG. 1. In FIG. 1, only a region of some of the cells 4 with which the connector unit 1 is mated is illustrated, and illustration of other regions is omitted.

A side of the connector unit 1 mated with the cells 4 is defined as a "front end side" or "front end", and a side opposite thereto is defined as "rear end side" or "rear end".

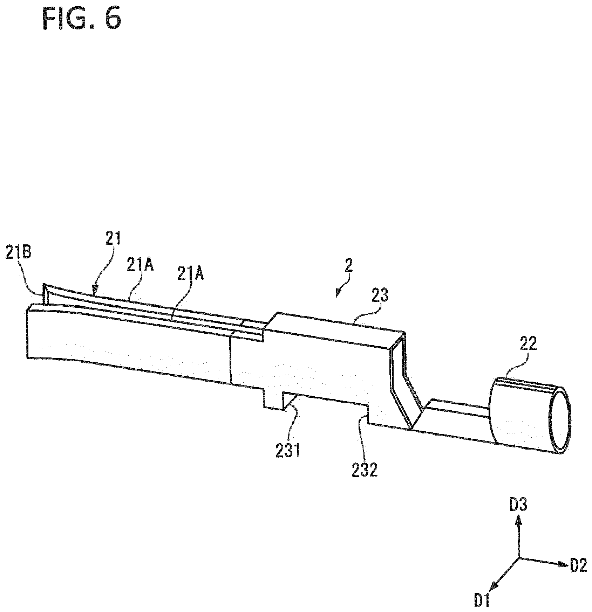

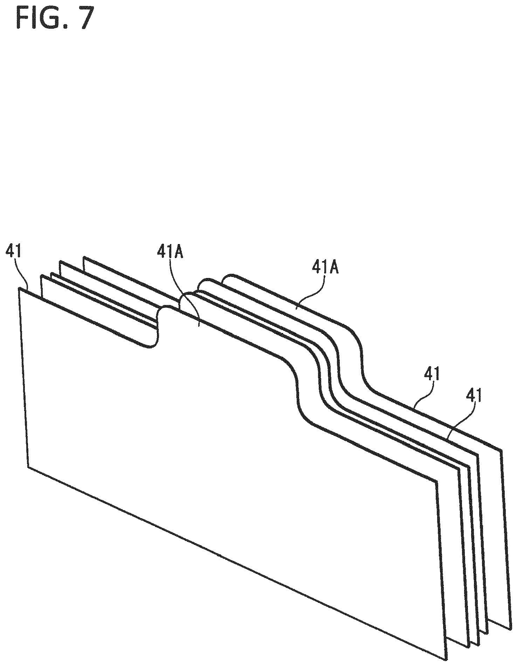

Generated voltages of the cells 4 are detected by a plurality of contacts 2 (FIG. 6) that are provided in the connector unit 1 mated with the cell stack 40. It is possible to detect failure, etc. of the cells 4 and to control a supply amount of fuel gas and oxidizer gas, based on the detected voltages of the cells 4. The contact 2 illustrated in FIG. 6 comes into contact with and is electrically connected with a voltage detection electrode 41 illustrated in FIG. 7.

Although illustration of a detailed configuration is omitted, each of the cells 4 includes an electrolyte film, an anode, and a cathode. The anode is provided on one side surface of the electrolyte film, and the cathode is provided on the other side surface of the electrolyte film. The cells 4 are stacked in a thickness direction of the cells 4 with the unillustrated separators interposed in-between. The anode and the cathode are insulated by each of the separators between the adjacent cells. Each of the separators includes a passage to supply the fuel gas such as hydrogen gas to the anode, and a passage to supply the oxidizer gas such as oxygen gas to the cathode. Each of the separators supports the sheet-like voltage detection electrode 41 (FIG. 7) that is electrically connected to the anode or the cathode. In the following, the voltage detection electrode 41 is referred to as the electrode 41.

The cell stack 40 includes hundreds of cells 4 including unillustrated cells, and the plurality of connector units 1 are mated with the whole of the cell stack 40. The connector unit 1 of a similar configuration is disposed next to (e.g., on rear surface side of) the connector unit 1 illustrated in FIG. 1, and is mated with unillustrated cells.

In the present embodiment, the contact 2 (FIG. 6) are respectively connected to the electrodes 41 every other cell 4.

The configuration is not limited to the present embodiment, and the contact 2 may be respectively connected to the electrodes 41 of every third or fourth cell. Alternatively, the contacts 2 may be respectively connected to the electrodes 41 of all cells 4, and may detect the voltages of all cells 4.

Positions of the respective cells 4 in the cell stack 40 are each varied within a tolerance range due to dimensional error of a thickness and an outer shape of each of the cells 4, assembling error of members forming the cells 4, etc. Accordingly, the positions of the respective electrodes 41 of the plurality of cells 4 are mutually deviated. As illustrated in FIG. 7, the plurality of electrodes 41 are not disposed at equal intervals because of the mutual deviation in a thickness direction, and are also mutually deviated in a stacking direction and a height direction.

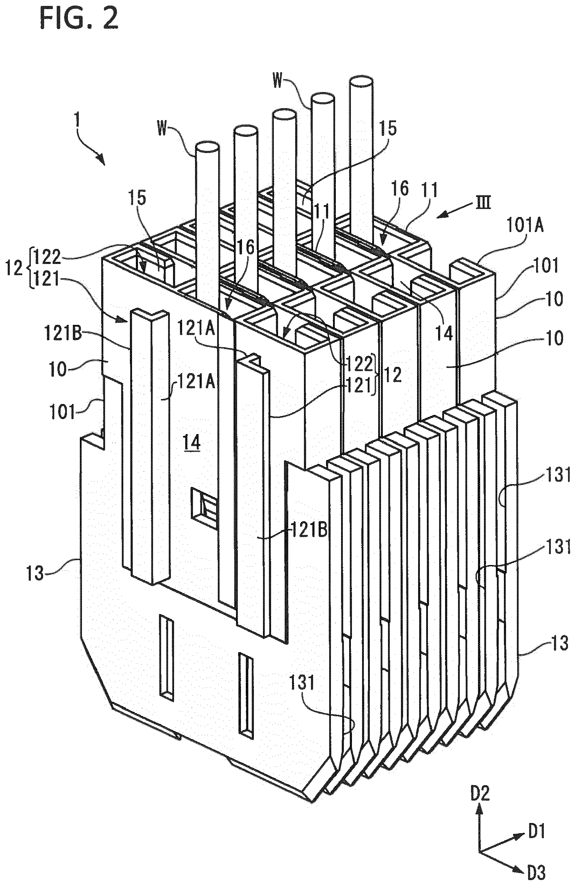

A configuration of the connector unit 1 according to the present embodiment is described below with reference to FIG. 2 to FIG. 5.

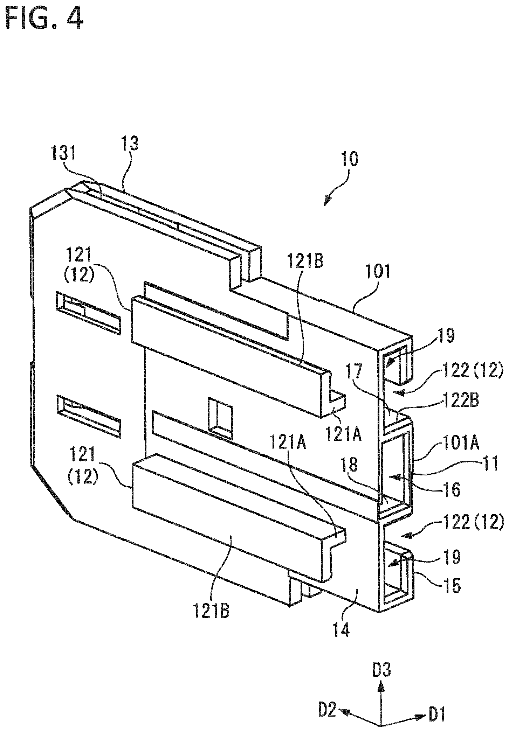

As illustrated in FIG. 2, FIG. 3, and FIG. 5, the connector unit 1 includes a plurality of (five in this example) connector modules 10. FIG. 4 illustrates a single connector module 10.

The plurality of connector modules 10 are stacked in the direction same as the direction in which the cells 4 are stacked. Each of the connector modules 10 corresponds to a single-position connector including a single contact 2 (FIG. 6). The connector modules 10 adjacent in the stacking direction are coupled and integrated to one another to form the multi-position connector unit 1.

The plurality of coupled connector modules 10 are not fixed to one another, and are relatively displaceable intentionally with a necessary and sufficient displacement amount. A displacement amount corresponding to at least the tolerance of each of the cells 4 is necessary. In the present embodiment, a displacement amount equal to or larger than the tolerance of each of the cells 4 is provided in consideration of vibration that is applied to the cell stack 40 during driving of the vehicle.

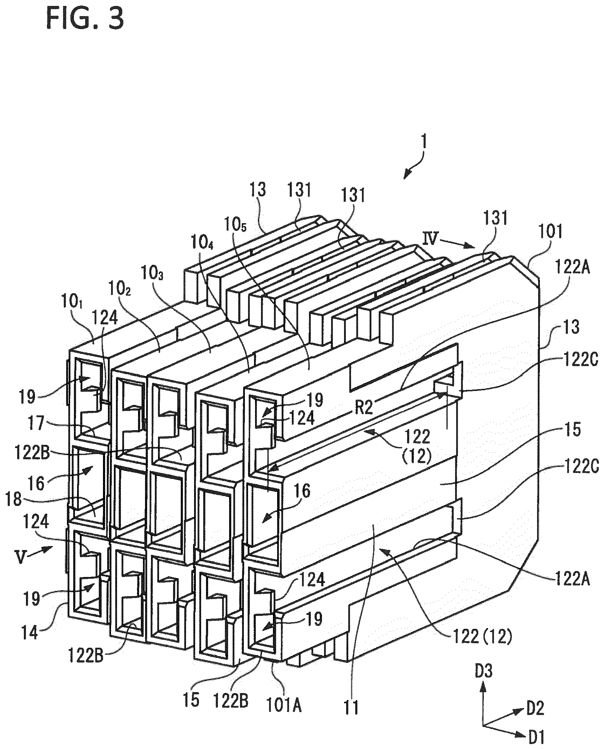

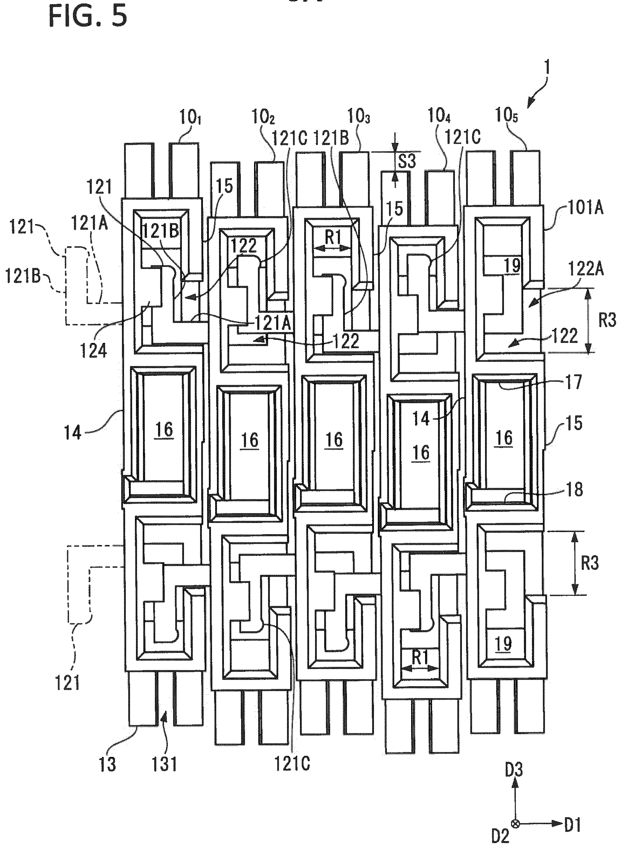

In the following, the direction in which the connector modules 10 are stacked is referred to as a lateral direction D1 (first direction), and the direction in which the connector unit 1 is mated with the cell stack 40 is referred to as a front-rear direction D2 (second direction), according to FIG. 3 and FIG. 5. Further, a direction orthogonal to both of the lateral direction D1 and the front-rear direction D2 is referred to as a vertical direction D3 (third direction).

In the present embodiment, the plurality of coupled connector modules 10 are individually displaceable in any of the lateral direction D1, the front-rear direction D2, and the vertical direction D3, to deal with the positional deviation of the electrodes 41 of the respective cells 4 described above (FIG. 7).

If uncoupled single-position connectors are stacked, it is possible to deal with the positional deviation of the cells 4; however, in this case, the larger number of single-position connectors corresponding to the number of cells 4, the voltages of which are detected, have to be mated with the cells 4 one by one, which deteriorates workability.

The present embodiment deals with the positional deviation of the cells 4 while achieving favorable mating workability by coupling the plurality of single-position connector modules 10 to form a unit.

The configuration of one connector module 10 is described with mainly reference to FIG. 3 and FIG. 4.

The connector module 10 includes the contact 2 (FIG. 6) and a module housing 101.

The contact 2 (FIG. 6) contains a metal material having elasticity, and includes a contact portion 21, an electric wire attaching portion 22 to which an electric wire W (FIG. 1 and FIG. 2) is crimped, and an intermediate portion 23. The contact portion 21 sandwiches the electrode 41 (FIG. 7) between a pair of strip-like contact beams 21A, 21A, and the intermediate portion 23 is positioned between the contact portion 21 and the electric wire attaching portion 22.

In FIG. 3 to FIG. 5, illustration of the contact 2 and the electric wire W is omitted.

A gap between the contact beams 21A, 21A of the contact portion 21 is larger than a plate thickness of the electrode 41 at a front end 21B of the contact portion 21, and a connection region 41A (FIG. 7) of the electrode 41 is inserted between the contact beams 21A, 21A from the front end 21B. Contact points of or set in the contact beams 21A, 21A respectively come into contact with opposite or front and rear surfaces of the inserted connection region 41A of the electrode 41 at a predetermined contact pressure.

The module housing 101 (FIG. 3 and FIG. 4) is an injection molding that contains or comprises an insulating resin material.

The module housing 101 includes two side walls 14 and 15 that face in opposite directions in the lateral direction D1, and has a substantially plate-like overall outer shape. The module housing 101 has a plate thickness of, for example, several mm.

The module housing 101 includes an accommodating and holding portion 11 (holding portion), a pair of coupling portions 12, 12, and a mated or mating portion 13. The accommodating and holding portion 11 houses and holds the contact 2. The pair of coupling portions 12, 12 are coupled to the adjacent connector modules 10. The mated portion 13 is mated with the cell 4 (FIG. 1).

The accommodating and holding portion 11 (FIG. 3 and FIG. 4) is positioned between the coupling portions 12, namely, at a center of the module housing 101 in the vertical direction D3, and houses the contact 2 (FIG. 6) and holds the intermediate portion 23 of the contact 2.

The accommodating and holding portion 11 includes the side walls 14 and 15, a wall 17, and a wall 18 so as to surround a cavity 16 in which the contact 2 is disposed.

Protrusions or steps 231 and 232 provided on the intermediate portion 23 of the contact 2 engage with unillustrated engaging portions provided on the wall 17 or the wall 18, which causes the contact 2 to be held by the accommodating and holding portion 11.

The cavity 16 penetrates through the module housing 101 in the front-rear direction D2. The electrical wire W (FIG. 2) connected to the contact 2 is drawn out from rear end 101A of the module housing 101.

The mated portion 13 (FIG. 3 and FIG. 4) is positioned at the front end of the connector module 10, and is mated with the cell 4 (FIG. 1) while receiving a portion of the separator of the cell 4 and a portion of the electrode 41. A groove or slot 131 that receives the connection region 41A (FIG. 7) of the electrode 41 and a predetermined region of the separator is provided in the mated portion 13.

When the plurality of connector modules 10 are coupled to one another, the mated portions 13 of the respective connector modules 10 are arranged in a comb-tooth shape. An upper end part of the separator and the connection region 41A are inserted respectively into the groove 131 of each of the mated portions 13 of the plurality of connector modules 10, which positions the contact portion 21 (FIG. 6) of the contact 2 of each of the connector modules 10 with respect to the connection region 41A (FIG. 7). The connection region 41A protrudes from one side of the electrode 41 with a width equivalent to the width of the contact portion 21 (dimension in vertical direction D3). A prescribed connection part with which the contact point of the contact 2 comes into contact is set in the connection region 41A.

The connector unit 1 illustrated in FIG. 3 is manufactured by assembling connector modules 10₁ to 10₅ in order from left side toward right side, such as assembling the connector module 10₁ positioned at left end in FIG. 3 and the connector module 10₂ adjacent on right side thereof, and then assembling the connector module 10₂ and the connector module 10₃ adjacent on right side thereof.

The following description for coupling of the connector modules 10 is easily understood by regarding that the connector module 10 illustrated in FIG. 4 is assembled to the connector module 10 illustrated in FIG. 3.

The coupling portions 12 (FIG. 3 and FIG. 4) are provided symmetrically in the vertical direction on both end sides of the accommodating and holding portion 11 that is located at the center of the module housing 101 in the vertical direction D3.

Each of the coupling portions 12 includes a protrusion 121 (FIG. 4) and a concave part 122. The protrusion 121 (FIG. 4) protrudes toward one end side (left side) in the lateral direction D1. The concave part 122 receives the protrusion 121 of the connector module 10 adjacent on the other end side (right side) in the lateral direction D1. The protrusion 121 includes a separation inhibiting part 121B that inhibits separation of the protrusion 121 from the concave part 122.

The protrusion 121 (FIG. 4) of one of the connector modules 10 and the concave part 122 (FIG. 3) of the other connector module 10 that receives the protrusion 121 loosely engage with each other. Therefore, as described above, the plurality of coupled connector modules 10 are individually displaceable in any of the lateral direction D1, the front-rear direction D2, and the vertical direction D3. The positions of the connector modules 10 (10₁ to 10₅) illustrated in FIG. 1, FIG. 3, and FIG. 5 are mutually shifted by the deviation of the positions of the electrodes 41 of the cells 4 (FIG. 7).

The protrusion 121 (FIG. 4) protrudes from the side wall 14 of the connector module 10. The separation inhibiting part 121B of the protrusion 121 is disposed between the side walls 14 and 15 of the adjacent connector module 10.

It is possible to omit formation of the protrusion 121 for the connector module 10 (connector module 10₁ of FIG. 3) disposed on the end part of the connector unit 1 in the lateral direction D1. As FIG. 5 illustrates the protrusion 121 by an alternate long and two short dashes line, the connector module 10₁ positioned at the left end of the connector unit 1 preferably includes no protrusions 121.

As a result, in a case where the plurality of connector units 1 are mated with the cell stack 40 (FIG. 1), working sequence or action of mating the connector units 1 is not restricted because the connector units 1 are not coupled to one another. In other words, it is unnecessary to mate the plurality of connector units 1 with the cell stack 40 in a predetermined order from the left side toward the right side, which improves workability. It is possible to detach only some of the connector units 1 because the connector units 1 are not coupled to one another, which facilitates replacement of only the failed connector unit 1.

The cavity 16 (section) and a pair of sections 19, 19 are provided between the side walls 14 and 15. The contact portion 21 and the intermediate portion 23 (FIG. 6) of the contact 2 are positioned in the cavity 16. The pair of sections 19 are respectively positioned above and below the cavity 16, and the separation inhibiting part 121B of the upper coupling portion 12 and the separation inhibiting part 121B of the lower coupling portion 12 are respectively positioned in the pair of sections 19. The cavity 16 and the upper section 19 are partitioned by the wall 17, and the cavity 16 and the lower section 19 are partitioned by the wall 18.

The concave part 122 (FIG. 3) extends along the front-rear direction D2 that is the direction in which the connector module 10 is mated with the cell 4 (FIG. 1). The concave part 122 includes a slit opening 122A provided in the side wall 15, and one of the sections 19. A dimension of the opening 122A in the vertical direction D3 is made smaller than a dimension of each of the sections 19 in the vertical direction D3.

The opening 122A penetrates through the side wall 15 in the thickness direction, at a position near the cavity 16. The opening 122A is provided along the front-rear direction D2 from the rear end position of the side wall 15. The rear end of the concave part 122 is opened, and serves as an insertion port 122B into which the protrusion 121 is inserted. A stopper protrusion 124 is provided at the rear end 101A of the module housing 101 at which the insertion port 122B is positioned. The stopper protrusion 124 inhibits rearward separation of the protrusion 121 inserted into the concave part 122.

In contrast, a front end of the concave part 122 is closed and includes a stopper wall 122C.

The protrusion 121 (FIG. 4) extends along the front-rear direction D2 and has a substantially L-shaped cross-sectional shape.

The protrusion 121 includes a penetration part 121A and a separation inhibiting part 121B. The penetration part 121A is put though the opening 122A of the concave part 122. The separation inhibiting part 121B is housed inside the concave part 122 (section 19). The separation inhibiting part 121B is bent or extends toward a direction separating from the cavity 16, along the vertical direction D3, with respect to the penetration part 121A extending along the lateral direction D1. The cross-sectional shape of the protrusion 121 is formed in the substantially L-shape by the penetration part 121A and the separation inhibiting part 121B.

The upper protrusion 121 and the lower protrusion 121 are disposed symmetrically in the vertical direction about the cavity 16.

The cross-sectional shape of the protrusion 121 is not limited to the L-shape, and may be a T-shape, etc. In the case of the T-shape, the separation inhibiting part 121B is preferably extended or extends toward the cavity 16 relative to the distal end of the penetration part 121A.

Forming the L-shape, however, makes it possible to save the space necessary for each of the sections 19 in the vertical direction D3 to contribute to downsizing of the connector unit 1 because the length of the separation inhibiting part 121B in the vertical direction D3 is smaller.

In the present embodiment, the accommodating and holding portion 11 is positioned at the center of the module housing 101 in the vertical direction D3, and the coupling portions 12 are positioned on the both sides relative to the accommodating and holding portion 11 in the vertical direction D3. Therefore, it is possible to stably couple the adjacent connector modules 10 by the protrusions 121 and the concave parts 122 of the coupling portions 12, as compared with a case where the coupling portion 12 is positioned only on the upper side or the lower side of the accommodating and holding portion 11.

Further, in the present embodiment, the separation inhibiting part 121B of the upper protrusion 121 and the separation inhibiting part 121B of the lower protrusion 121 both extend from the respective penetration parts 121A in the direction separating from the cavity 16. Accordingly, distal ends 121C (FIG. 5) of the two protrusions 121 are positioned on the outer end side of the connector module 10 in the vertical direction D3, as compared with a case where the separation inhibiting part 121B of the upper protrusion 121 and the separation inhibiting part 121B of the lower protrusion 121 both extend from the respective penetration parts 121A in the opposite direction, namely, in a direction coming close to or towards the cavity 16.

As a result, the distal end 121C of the protrusion 121 abuts on the side wall 15 on the outer end side of the connector module 10 in the vertical direction D3 when force to open a gap between the adjacent connector modules 10 acts on the upper side or the lower side, which makes it possible to sufficiently inhibit inclination of the connector module 10, as compared with the case where the protrusion 121 protrudes in the opposite direction. The distal end 121C of the protrusion 121 supporting the side wall 15 preferably has a semispherical shape.

Note that the connector module 10 may have a configuration such that the separation inhibiting part 121B of the upper protrusion 121 and the separation inhibiting part 121B of the lower protrusion 121 both extend from the respective penetration parts 121A in the direction opposite to the direction of the present embodiment, namely, in the direction coming close to or towards the cavity 16.

When the adjacent connector modules 10 are assembled to each other, the protrusion 121 of one of the connector modules 10 is inserted into the concave part 122 from the insertion port 122B of the other connector module 10 (FIG. 3) by climbing over the stopper protrusion 124, and the protrusion 121 is slid along the front-rear direction D2 to dispose the separation inhibiting part 121B inside the concave part 122. As illustrated in FIG. 5, the separation inhibiting part 121B of the connector module 10₄ is overlapped with the side wall 15 of the connector module 10₃ in the vertical direction D3 even in the state where the connector module 10₃ and the connector module 10₄ are relatively displaced to the maximum possible extent in the vertical direction D3. Therefore, the separation inhibiting part 121B stays inside the concave part 122 because the separation inhibiting part 121B does not climb over the side wall 15 in the lateral direction D1 and come out of the concave part 122. Accordingly, the separation inhibiting part 121B inhibits separation of the protrusion 121 from the concave part 122. When the separation of the protrusion 121 from the concave part 122 is inhibited, the adjacent connector modules 10 are not separated from each other and are maintained in the coupled state.

The protrusion 121 inserted into the concave part 122 is displaceable in the front-rear direction D2 within a predetermined range R2 (FIG. 3). The range R2 corresponds to a distance between the stopper protrusion 124 and the stopper wall 122C, and is longer than the dimension of the protrusion 121 in the front-rear direction D2. The protrusion 121 is provided with a movable range that is obtained by subtracting the dimension of the protrusion 121 from the distance (range R2) between the stopper protrusion 124 and the stopper wall 122C, in the front-rear direction D2. One of the adjacent connector modules 10 is displaceable within the range R2, with respect to the other connector module 10, by the displacement amount that is set in consideration of the estimated deviation amount of the cell 4 in the front-rear direction D2.

The displacement in the lateral direction D1 and the vertical direction D3 is described with reference to FIG. 5.

As illustrated in FIG. 5, a dimension (width) of each of the sections 19 in the lateral direction D1, namely, a distance between the side walls 14 and 15 is larger than the plate thickness of the separation inhibiting part 121B of the protrusion 121 disposed in each of the sections 19. Therefore, the protrusion 121 is displaceable in the lateral direction D1 within a range R1 corresponding to the width of each of the sections 19. The protrusion 121 is provided with the movable range that is obtained by subtracting the plate thickness of the separation inhibiting part 121B from the width of the section 19 (range R1) in the lateral direction D1. The adjacent connector modules 10 are displaceable by the displacement amount set in the lateral direction D1, within the range R1.

The dimension (height) of the opening 122A of the concave part 122 in the vertical direction D3 is larger than the plate thickness of the penetration part 121A of the protrusion 121. Accordingly, the protrusion 121 is displaceable in the vertical direction D3 within a range R3 corresponding to the height of the opening 122A. The protrusion 121 is provided with the movable range that is obtained by subtracting the plate thickness of the penetration part 121A from the height (range R3) of the opening 122A in the vertical direction D3.

FIG. 5 illustrates the state where the connector modules 10₁ to 10₅ are relatively displaced individually in the vertical direction D3 due to deviation of the positions of the cells 4 (FIG. 1) respectively corresponding to the connector modules 10₁ to 10₅ in the vertical direction D3.

For example, when the cell 4 to which the contact 2 of the connector module 10₃ is connected and the cell 4 to which the contact 2 of the connector module 10₄ is connected are deviated in the vertical direction D3, the connector modules 10₃ and 10₄ are displaced in the vertical direction D3 by a displacement amount S3 that corresponds to the deviation amount between the cells 4 so as to follow the positions of the respective cells 4.

In other words, the positional deviation due to the tolerance of the cells 4 and the positional deviation of the cells 4 due to vibration are absorbed by the relative displacement of the connector modules 10₃ and 10₄. This eliminates the necessity of setting an excess clearance between the contact 2 and the inner surface of the cavity 16 in the vertical direction D3 in consideration of the positional deviation. In addition, the connector module 10₃ and the connector module 10₄ are freely and relatively displaced up to the displacement amount S3 that is set corresponding to the positional deviation amount of the cell 4. This makes it possible to prevent the contact point of the contact 2 from sliding on the electrode 41 of the cell 4.

The displacement amount S3 is also limited by the fact that the displacement of the protrusion 121 with respect to the opening 122A of the concave part 122 is limited within the range R3. Therefore, the connector module 10₃ and the connector module 10₄ are not relatively displaced excessively. This makes it possible to prevent the contact 2 and the module housing 101 from being damaged by the excess relative displacement.

The same applies to the lateral direction D1 and the front-rear direction D2.

When the stacked cells 4 are positionally deviated in the direction separating from each other or coming close to each other in the lateral direction D1 due to tolerances or vibration, the connector modules 10 are relatively displaced in the lateral direction D1 to absorb the positional deviation of the cells 4. The plurality of connector modules 10 are freely and individually displaceable by the predetermined displacement amount, which makes it possible to achieve connection reliability without applying excess force to the contacts 2 and the electrodes 41. Moreover, it is unnecessary to consider accumulation of the tolerance of the cells 4 in the lateral direction D1. Furthermore, it is possible to minimize each clearance between the contact 2 and the side walls 14 and 15 forming the cavity 16, which makes it possible to contribute to downsizing of the connector unit 1 that is made up of the coupled thin connector modules 10.

As for the front-rear direction D2, when the stacked cells 4 are positionally deviated in the front-rear direction D2 due to the tolerance or vibration, the plurality of connector modules 10 are relatively displaced in the front-rear direction D2 to absorb the positional deviation of the cells 4. Also in this case, the plurality of connector modules 10 are freely and individually displaceable by the predetermined displacement amount, which makes it possible to prevent the contact point of the contact 2 from sliding on the electrode 41 of the cell 4. This provides for secure connection reliability. Further, it is unnecessary to make the contact 2 long such that the electrode 41 is inserted into an innermost part more than necessary, with respect to the contact point of the contact 2 because the plurality of connector modules 10 are freely and individually displaceable by the predetermined displacement amount. Therefore, it is possible to downsize the module housing 101 in the front-rear direction D2 in which the contact 2 extends, and to decrease the distance in which the contact 2 and the electrode 41 slide when the contact 2 is inserted or pulled out. This makes it possible to suppress abrasion of the contact point.

The connector unit 1 according to the present embodiment deals with the positional deviation of the cell 4 in all directions that are combinations of two or more of the lateral direction D1, the front-rear direction D2, and the vertical direction D3. For example, when the cell 4 is deflected in out-of-plane direction or the cell stack 40 is deformed so as to be distorted in a rotation direction of the lateral direction D1, the plurality of connector modules 10 are relatively displaced individually in the three directions D1, D2, and D3, which makes it possible to suppress deviation of the positions of the contact points from the respective prescribed positions on the electrodes 41 of the cells 4. As a result, the contact point of the contact 2 comes into contact with a fixed position of the electrode 41 in each of the cells 4. This makes it possible for the contact 2 to stably and reliably detect the voltage of the connected cell 4, and to improve measurement accuracy.

Other than the above, the configurations described in the above-described embodiment may be selected or appropriately modified without departing from the scope of the present invention.

For example, each of the connector modules 10 may have a configuration in which the separation inhibiting parts 121B of the upper protrusion 121 and the lower protrusion 121 both extend upward from the penetration part 121A.

For example, connector modules each having two or more contacts 2 may be coupled to configure the connector unit of the present invention.

Moreover, the separation inhibiting part of the present invention is not limited to the above-described embodiment, and may be separate from the penetration part 121A of the protrusion 121.

## Claims

1. A connector unit (1), comprising a plurality of connector modules (10) that are stacked in a first direction (D1) and each include a contact (2), wherein
a direction (D2) that is orthogonal to the first direction (D1) and in which the connector modules (10) are mated with respective mating objects is a second direction (D2), and a direction (D3) that is orthogonal to both of the first direction (D1) and the second direction (D2) is a third direction (D3),
each of the connector modules (10) includes a holding portion (11) and a coupling portion (12), the holding portion (11) holding the contact (2), and the coupling portion (12) being positioned on one side or on each of both sides in the third direction of the holding portion (11) and being coupled to the adjacent connector modules in the first direction (D1),
the coupling portion (12) including a protrusion (121), a concave part (122), and a separation inhibiting part (121B), the protrusion (121) protruding toward one side in the first direction (D1), the concave part (122) receiving the protrusion (121) of the adjacent connector module (10) on the other side in the first direction (D1), and the separation inhibiting part (121B) inhibiting separation of the protrusion (121) from the concave part (122),
the plurality of connector modules (10) coupled by the coupling portions (12) are individually displaceable in the first direction (D1), the second direction (D2), and the third direction (D3);
each of the connector modules (10) includes two side walls (14, 15) that face in opposite directions in the first direction (D1),
the protrusion (121) protrudes from one (14) of the two side walls (14, 15), and
a section or cavity (16) of the holding portion (11) in which the contact (2) is positioned is provided between the two side walls (14, 15),
**characterised in that** a section (19) in which the separation inhibiting part (121B) is positioned is also provided between the two side walls (14, 15).

2. The connector unit (1) according to claim 1, wherein
the concave part (122) extends along the second direction (D2), and
each of the connector modules (10) is displaceable, with respect to the connector modules (10) adjacent in the first direction (D1), within a movable range (R2) that is provided, in the second direction (D2), to the protrusion (121) inserted into the concave part (122).

3. The connector unit (1) according to claim 1 or 2, wherein
the concave part (122) opens on an rear end (101A) in the second direction (D2), and
each of the connector modules (10) is assembled to the connector modules (10) adjacent in the first direction (D1) by inserting the protrusion (121) into the concave part (122) from an insertion port and sliding the protrusion (121) along the second direction (D2), the insertion port being positioned on the rear end (101A) of the concave part (122).

4. The connector unit (1) according to any one of claims 1 to 3, wherein the protrusion (121) includes a penetration part (121A)and the separation inhibiting part (121B), the penetration part (121A) penetrating through an opening of the concave part (122) along the first direction (D1) and being provided with a movable range (R3) in the third direction (D3) with respect to the concave part (122), and the separation inhibiting part (121B) being housed inside the concave part (122).

5. The connector unit (1) according to claim 4, wherein the protrusion (121) is made up of the penetration part (121A) and the separation inhibiting part (121B) together having a substantially L-shaped cross-section.

6. The connector unit (1) according to any one of claims 1 to 5, wherein
the holding portion (11) is positioned at a center of each of the connector modules (10) in the third direction (D3), and
each of the connector modules (10) includes one said coupling portion (12) on each of both sides of the holding portion (11) in the third direction (D3).

7. A stack of at least two connector unit including a first connector unit (1) according to any one of claims 1 to 6, wherein in the first connector unit (1) is configured to be disposed adjacent to another second connector unit (1) in the first direction (D1),
one of the connector modules (10) that faces the other connector unit (1) includes no said protrusion (121), and
the other connector modules (10) each include at least one said protrusion (121).

## Patentansprüche

1. Verbindereinheit (1) mit mehreren Verbindermodulen (10), die in einer ersten Richtung (D1) gestapelt sind und jeweils einen Kontakt (2) aufweisen, wobei
eine Richtung (D2), die orthogonal zur ersten Richtung (D1) ist und in der die Verbindermodule (10) mit jeweiligen Gegenobjekten zusammengesteckt werden, eine zweite Richtung (D2) ist, und eine Richtung (D3), die orthogonal zur ersten Richtung (D1) und zur zweiten Richtung (D2) ist, eine dritte Richtung (D3) ist,
jedes der Verbindermodule (10) einen Halteteil (11) und einen Kupplungsteil (12) aufweist, wobei der Halteteil (11) den Kontakt (2) hält und der Kupplungsteil (12) auf einer Seite oder auf jeder von beiden Seiten in der dritten Richtung des Halteteils (11) positioniert ist und mit den benachbarten Verbindermodulen in der ersten Richtung (D1) gekoppelt ist,
wobei der Kupplungsteil (12) einen Vorsprung (121), einen konkaven Teil (122) und einen Trennungshemmteil (121B) umfasst, wobei der Vorsprung (121) in Richtung einer Seite in der ersten Richtung (D1) vorsteht, wobei der konkave Teil (122) den Vorsprung (121) des benachbarten Verbindermoduls (10) auf der anderen Seite in der ersten Richtung (D1) aufnimmt und der Trennungshemmteil (121B) eine Trennung des Vorsprungs (121) vom konkaven Teil (122) verhütet,
die mehreren durch die Kopplungsteile (12) gekoppelten Verbindermodule (10) in der ersten Richtung (D1), der zweiten Richtung (D2) und der dritten Richtung (D3) individuell verschoben werden können;
jedes der Verbindermodule (10) zwei Seitenwände (14, 15) aufweist, die in entgegengesetzten Richtungen in die erste Richtung (D1) zeigen,
der Vorsprung (121) von einem (14) der beiden Seitenwände (14, 15) vorsteht, und
ein Abschnitt oder Hohlraum (16) des Halteteils (11), in dem der Kontakt (2) positioniert ist, zwischen den beiden Seitenwänden (14, 15) vorgesehen ist,
**dadurch gekennzeichnet, dass** auch ein Abschnitt (19), in dem der Trennungshemmteil (121B) positioniert ist, zwischen den beiden Seitenwänden (14, 15) vorgesehen ist.

2. Verbindereinheit (1) nach Anspruch 1, wobei
der konkave Teil (122) sich entlang der zweiten Richtung (D2) erstreckt, und
jedes der Verbindermodule (10) mit Bezug auf die in der ersten Richtung (D1) benachbarten Verbindermodule (10) innerhalb eines Bewegungsbereichs (R2) verschiebbar ist, der in der zweiten Richtung (D2) für den in den konkaven Teil (122) eingeführten Vorsprung (121) vorgesehen ist.

3. Verbindereinheit (1) nach Anspruch 1 oder 2, wobei
der konkave Teil (122) an einem hinteren Ende (101A) in der zweiten Richtung (D2) öffnet, und
jedes der Verbindermodule (10) an den in der ersten Richtung (D1) benachbarten Verbindermodulen (10) durch Einführen des Vorsprungs (121) in den konkaven Teil (122) von einer Einführungsöffnung und Verschieben des Vorsprungs (121) entlang der zweiten Richtung (D2) montiert ist, wobei die Einführungsöffnung am hinteren Ende (101A) des konkaven Teils (122) positioniert ist.

4. Verbindereinheit (1) nach einem der Ansprüche 1 bis 3, wobei der Vorsprung (121) einen Penetrationsteil (121A) und den Trennungshemmteil (121B) aufweist, wobei der Penetrationsteil (121A) durch eine Öffnung des konkaven Teils (122) entlang der ersten Richtung (D1) penetriert und mit einem Bewegungsbereich (R3) in der dritten Richtung (D3) mit Bezug auf den konkaven Teil (122) versehen ist und wobei der Trennungshemmteil (121B) innerhalb des konkaven Teils (122) aufgenommen ist.

5. Verbindereinheit (1) nach Anspruch 4, wobei der Vorsprung (121) aus dem Penetrationsteil (121A) und dem Trennungshemmteil (121B) zusammengesetzt ist, die zusammen einen im Wesentlichen L-förmigen Querschnitt haben.

6. Verbindereinheit (1) nach einem der Ansprüche 1 bis 5, wobei
der Halteteil (11) in einer Mitte jedes der Verbindermodule (10) in der dritten Richtung (D3) positioniert ist, und
jedes der Verbindermodule (10) einen genannten Kupplungsteil (12) auf jeder von beiden Seiten des Halteteils (11) in der dritten Richtung (D3) beinhaltet.

7. Stapel von wenigstens zwei Verbindereinheiten einschließlich einer ersten Verbindereinheit (1) nach einem der Ansprüche 1 bis 6, wobei die erste Verbindereinheit (1) so konfiguriert ist, dass sie einer anderen zweiten Verbindereinheit (1) in der ersten Richtung (D1) benachbart angeordnet ist,
wobei eines der Verbindermodule (10), das der anderen Verbindereinheit (1) zugewandt ist, keinen genannten Vorsprung (121) aufweist, und
die anderen Verbindermodule (10) jeweils wenigstens einen genannten Vorsprung (121) aufweisen.

## Revendications

1. Unité connecteur (1), comprenant une pluralité de modules de connecteur (10) qui sont empilés suivant un premier sens (D1) et chacun incluant un contact (2), dans laquelle
un sens (D2) qui est orthogonal au premier sens (D1) et dans lequel les modules de connecteur (10) sont accouplés avec des objets d'accouplement respectifs est un deuxième sens (D2), et un sens (D3) qui est orthogonal à la fois au premier sens (D1) et au deuxième sens (D2) est un troisième sens (D3),
chacun des modules de connecteur (10) inclut une portion de maintien (11) et une portion de couplage (12), la portion de maintien (11) maintenant le contact (2), et la portion de couplage (12) étant positionnée sur un côté ou sur chacun des deux côtés suivant le troisième sens de la portion de maintien (11) et étant couplée aux modules de connecteur adjacents suivant le premier sens (D1),
la portion de couplage (12) incluant une saillie (121), une partie concave (122), et une partie d'interdiction de séparation (121B), la saillie (121) faisant saillie vers un côté suivant le premier sens (D1), la partie concave (122) recevant la saillie (121) du module de connecteur adjacent (10) sur l'autre côté suivant le premier sens (D1), et la partie d'interdiction de séparation (121B) interdisant la séparation de la saillie (121) par rapport à la partie concave (122),
la pluralité de modules de connecteur (10) couplés par les portions de couplage (12) sont aptes à être déplacés individuellement suivant le premier sens (D1), le deuxième sens (D2) et le troisième sens (D3) ;
chacun des modules de connecteur (10) inclut deux parois latérales (14, 15) qui sont tournées dans des sens opposés suivant le premier sens (D1),
la saillie (121) fait saillie à partir d'une (14) des deux parois latérales (14, 15), et
une section ou cavité (16) de la portion de maintien (11) dans laquelle le contact (2) est positionné est prévue entre les deux parois latérales (14, 15),
**caractérisée en ce qu'**une section (19) dans laquelle la partie d'interdiction de séparation (121B) est positionnée est également prévue entre les deux parois latérales (14, 15).

2. Unité connecteur (1) selon la revendication 1, dans laquelle
la partie concave (122) s'étend le long du deuxième sens (D2), et
chacun des modules de connecteur (10) est apte à être déplacé, par rapport aux modules de connecteur (10) adjacents suivant le premier sens (D1), au sein d'une gamme de déplacement (R2) qui est prévue, suivant le deuxième sens (D2), jusqu'à la saillie (121) insérée dans la partie concave (122).

3. Unité connecteur (1) selon la revendication 1 ou 2, dans laquelle
la partie concave (122) s'ouvre sur une extrémité arrière (101A) suivant le deuxième sens (D2), et
chacun des modules de connecteur (10) est assemblé aux modules de connecteur (10) adjacents suivant le premier sens (D1) grâce à l'insertion de la saillie (121) dans la partie concave (122) à partir d'un orifice d'insertion et au coulissement de la saillie (121) le long du deuxième sens (D2), l'orifice d'insertion étant positionné sur l'extrémité arrière (101A) de la partie concave (122).

4. Unité connecteur (1) selon l'une quelconque des revendications 1 à 3, dans laquelle la saillie (121) inclut une partie de pénétration (121A) et la partie d'interdiction de séparation (121B), la partie de pénétration (121A) pénétrant à travers une ouverture de la partie concave (122) le long du premier sens (D1) et étant dotée d'une gamme de déplacement (R3) suivant le troisième sens (D3) par rapport à la partie concave (122), et la partie d'interdiction de séparation (121B) étant logée à l'intérieur de la partie concave (122).

5. Unité connecteur (1) selon la revendication 4, dans laquelle la saillie (121) est composée de la partie de pénétration (121A) et de la partie d'interdiction de séparation (121B) ayant ensemble une coupe transversale substantiellement en forme de L.

6. Unité connecteur (1) selon l'une quelconque des revendications 1 à 5, dans laquelle
la portion de maintien (11) est positionnée au niveau d'un centre de chacun des modules de connecteur (10) suivant le troisième sens (D3), et
chacun des modules de connecteur (10) inclut une dite portion de couplage (12) sur chacun des deux côtés de la portion de maintien (11) suivant le troisième sens (D3).

7. Empilement d'au moins deux unités connecteur incluant une première unité connecteur (1) selon l'une quelconque des revendications 1 à 6, dans lequel la première unité connecteur (1) est configurée pour être disposée de manière adjacente à une autre deuxième unité connecteur (1) suivant le premier sens (D1),
l'un des modules de connecteur (10) qui fait face à l'autre unité connecteur (1) n'inclut aucune dite saillie (121), et
chacun des autres modules de connecteur (10) inclut au moins une dite saillie (121).
